# EUROPEAN PATENT APPLICATION

(11) **EP 3 254 917 A1**
(43) Date of publication of application: **13.12.2017**
(21) Application number: 16425049.0
(22) Date of filing: 07.06.2016
(51) Int. Cl.: B60W 30/14, B60W 40/076, B60W 50/00, B60W 40/09

(54) **METHOD AND DEVICE TO CONTROL VEHICLE BEHAVIOUR**

(71) Applicant: Barelli, Giuseppe, 50041 Calenzano (FI) (IT)
(72) Inventor: Barelli, Giuseppe, 50041 Calenzano (FI) (IT)

(57) **Abstract**

This abstract is provided to introduce a selection of concepts in a simplified form that are further described below in the Detailed System Description section. The abstract is not intended to identify key features of the claimed subject matter. Disclosed in this paper is a vehicle performance control device conceived to autonomously determine a safe, economic and eco-sustainable driving behaviour to reduce the mechanical stress, the wear and the maintenance cost of vehicles. The invention provides a vehicle performance control device arranged between the vehicle's Pedal Interface (PI) including the cruise control, the speed limitation and the speed control systems, or a combination of these, and the vehicle's Electronic Control Unit (ECU). The control device autonomously and dynamically acts on the functional status of the cruise control, the speed limitation or the speed control system to modulate the vehicle's performance. The performance is tuned depending on the current vehicle's position, speed, acceleration, inclination and pose respect to the ground. For example, the vehicle's max speed can be limited in specific geographic areas or during specific time intervals when the driver is supposed to drive improperly, excessively were off the vehicle, or parts of it, or stress the mechanics. The performance limitation can be turned off manually by the drivers for safety reasons, remotely by fleet's managers or fleet's management systems , or automatically by the system whenever the context requires the entire engine power to get the vehicle working properly. For example the engine performance will be not limited if the vehicle gets in an uphill over a certain inclination threshold to avoid stops due to torque outages. The control device embeds a communication unit able to connect to the internet, exchange data with personal computers, diagnostic tools or personal devices such as smartphones and tablets. The control device provides all the useful information for the estimation of the vehicle's status, the driver's behaviours and the induced mechanical stress and wear off. The communication unit is intended to exchange data for the monitoring of the vehicle's status, its performance and for the tuning of the control unit's strategy. The communication can be automatically scheduled by the system itself, attempted by the remote fleet's managers or the fleet's management systems, or performed by humans operators or the connected remote devices on requests. A human machine interface provides visual, acoustic or haptic feedbacks, or a combination of these, to the driver on the status of the control device, the estimated level of wear or mechanical stress induced on the vehicle or part of the vehicle, the drive safety, efficiency and the eco-sustainability.

## Description

### Background:

Heavy, medium and light trucks are often subject to intense and premature wear if used and driven improperly or dedicated to heavy or exhausting daily activities. This is true especially for trucks used by non-professionals drivers, or improperly driven in daily duties requiring frequent starts and stops in urban or sub-urban areas. This working condition is typical for example in the doorstep garbage collection or the daily transportation of goods like the food provisioning to groceries or the newspaper daily delivery. During this kind of drive, the entire truck including the engine, gears, tyres, breaking and suspension system, is subject to a relevant mechanical stress. Non-professional drivers usually accelerate or speeds up the vehicles improperly to save time, compromising the safety and the eco-sustainability of the drive. This driving behaviours usually lead to high risks of mechanical failures and high maintenance costs with a relevant economic impact for the truck or the trucks fleet owners. The truck fleet owners are particularly interested in the reduction of the cost for the fleet maintenance and the promotion of a safe, effective and efficient drive to the employed drivers. The use of simple speed control or limiting systems do not respond to the need for an effective and efficient drive. Indeed, the systematic cut of the performance of a vehicle may lead to a loss of time for the drivers to reach the operational work areas, while manual adjustable systems may be improperly tuned by workers reducing the effectiveness of the system to prevent truck failures or improper drive behaviours. More effective control systems can be designed, to improve the fleet's management and the maintenance of trucks, without compromising the performance of the vehicles during the normal and proper working conditions and drive. Such systems should have no impact on the vehicle's performance in the normal and non-stressing driving, but limit the performance only when heavy and intense mechanical stress or wear is inducted.

### Detailed System Description:

The proposed invention, from now referred as the Right Behaviour Driver (RBD) system relates to an adaptive and reconfigurable apparatus of a vehicle and a method thereof capable of autonomously and actively control the vehicle's performance to determine a safe, efficient and effective drive. The RBD system also provides to the drivers or the fleet managers the information for the estimation of the fuel consumption, or the risks of faults due to the improperly induced stress and premature wear of the mechanics, like gears, breaking and suspension systems, or consumable parts like tires and brakes.

### System functionalities

The RBD system is a device devoted to the control of the PI installed on the vehicles. The system automatically controls the vehicle in real time by autonomously and dynamically acting on the functional status of the cruise control, the speed limitation or the speed control system or a combination of these, embedded in the PI. The control consists in the activation or deactivation of one or more functionalities of the cruise control, the speed limitation or the speed control system, in order to modulate the vehicle's performance. The control strategy depends on the vehicle typology, the current vehicle position, speed, acceleration, inclination and pose respect to the ground, brakes and power-take off status. The RBD system gets these data from the embedded sensors, its interfaces or the ECU as described in the System Architecture section. During the situations where the driver is supposed to drive properly and diligently, like in the transfer of a vehicle to the operational areas of work, the RBD system do not limit its performance. This behaviour is intended to improve the usability and the acceptability when the system is installed on industrial, commercial and work vehicles, to let the driver rapidly reach the supposed destination or operational areas, and efficiently start to work. Whenever the driver is supposed to drive improperly, excessively were off the vehicle or stress the mechanics, the RBD system automatically and properly acts on the cruise control, the speed limitation or the speed control system. In particular, the RBD automatically acts to limit the vehicle performance in specific geographic areas or during specific time intervals when the vehicle is expected to be subject of intense mechanical stress due to specific working activities, including frequent starts and stops or rapid and intense accelerations or decelerations. A visual output, an acoustic or haptic signal, or a combination of these ca be provided to inform the driver on the time or the modality of the RBD system activation. The RBD's control strategy consists in the activation of the speed limitation, the cruise control or the speed control system, if the vehicle speed exceeds a predetermined speed threshold, here referred as RBD Speed THreshold (SpeedTH). In order to achieve a safe intervention of the system, the speed limitation or the speed control system must have a pre-set speed limit higher respect to the SpeedTH value. Once the RDB system has determined the activation of the speed limitation, the cruise control or the speed control system, the vehicle speed performance is bounded to the pre-set speed limit, resulting in a progressive performance limitation as the driver acts pushing the acceleration pedal.

For example, if the RBD system is installed on a truck for garbage collection, the system acts by limiting the performance of the vehicle whenever it enters in the areas dedicated to the doorstep garbage collection, or in the specific time intervals dedicated to this kind of activity, for example, based on the activity work plan of the garbage collection service. The control strategy automatically recovers the vehicle performance in specific conditions to ensure a good driveability, avoid unwanted stops due to torque outages or undesired effects on the power take-off if plugged. Indeed the RBD system continuously checks the speed, acceleration, inclination and pose of the vehicle respect to the ground, as well as the hand break and power take-off status, to identify the situations where the performance limitation can negatively impact on the vehicle's usability and utility. For example, the vehicle's original performance will be automatically restored by the RBD system, whenever it gets rising on a uphill over a certain inclination threshold to avoid stops due to engine torque outages. Similarly, the system stops the control on the PI each time the vehicle is stationary over a predetermined time period with the hand brakes on, or the power take-off plugged. Furthermore the RBD system can act as an event logger, saving all the relevant information on the vehicle and the system status in an internal memory unit. The RBD can continuously read and save for example the data from the connected sensors or the vehicle's electronic control unit and the connected buses like the On Board Diagnostics Buses (OBD) including the CAN bus, K-LINE, FMS and other similar communication interfaces. The registered events and the vehicle's and RBD's status can include the times of the RBD system activations, the adopted control strategy, the relevant information on the vehicle status including the position, the speed, the inclination, the accelerations, the load on the suspension system, the delivered engine torque and activation of the power take-off unit and hand brakes and the fuel consumption. All this information are intended for example to (i) assess the effectiveness of the RBD system to determine a safe, cost-effective and eco-friendly drive or (ii) improve the vehicle or the vehicle fleet management by controlling the status and the operative conditions of the vehicles (ii) estimate the level of stress and wear induced on the vehicle's mechanical or consumable parts. For example the continuous information on the vehicle status from the ECU, including the power take-off, speed or the load on the suspension can be used to estimate how the vehicle is used and the actions performed by the driver. The ability of the RBD system in determining an eco-efficient drive can be assessed by processing the information on the number and the periods of the system activations, and the fuel consumption of the vehicle. Similarly, the induced stress and wear on the vehicle mechanics ca be estimated by analysing the vehicle dynamics like linear and angular speeds, accelerations and jerks, the activation of the breaks or the delivered engine torque.

The RBD system can also be instrumented with a communication unit able to exchange data with external devices in the vehicle proximity, access the internet or the mobile phone networks. The communication unit can provide the information on the vehicle and the RBD system status, in real time or at scheduled time periods depending on the vehicles' management strategy. The information can include for example the number of activation of the system and the time spent limiting the vehicle, the driver performance and the vehicle status and dynamics. This information can be used for the continuous monitoring of the status and the performance of a vehicle or a fleet of vehicles, the assessment of the effectiveness and efficiency of the RBD system, the evaluation of the driver's behaviours and the identification of the performed activities as well as an estimation of the mechanical stress and wear induced on the vehicle. The communication unit can provide this information directly to external devices or send it onto an internet connected server to improve the remote management of vehicles or fleets of vehicles. External devices such as personal computers, diagnostic tools, smartphones or other personal devices could be connected using for example the Bluetooth, the WI-FI or the NFC communication protocols and dedicated software applications. The use of mobile broadband technologies like the GSM, UMTS, HSPA or LTE, or a combination of these, can provide the RBD systems with an internet connection for example to send the information mentioned above directly to a remote server, dedicated to the management of a vehicle or a fleet of vehicles and the assessment of the RBD status and effectiveness. The same communication unit can be used to download data into the RBD system and reconfigure the vehicle control strategy in real time or at specific time intervals. For example it can be used to set new parameters regarding the geographical areas or the time intervals associated to the RBD activation or the SpeedTH parameter. The status of the RBD system can be also monitored by the driver by means of a dedicated Human Machine Interface (HMI) like a speaker, a haptic interface, LED interfaces, a monitor, a touch screen, or a combination of these, integrated in the vehicle's dashboard. The HMI will be used for example to inform the driver about the activation of the control strategy on the vehicle or the eco-sustainability of its driving behaviours. Furthermore the RBD can be used as a communication system using the same HMI to provide some useful information received from the connected devices or the internet servers directly to the driver. This functionality can be used to get remote servers, fleet's managers or fleet's management systems connected to the drivers on the roads, continuously or at scheduled times.

### System architecture

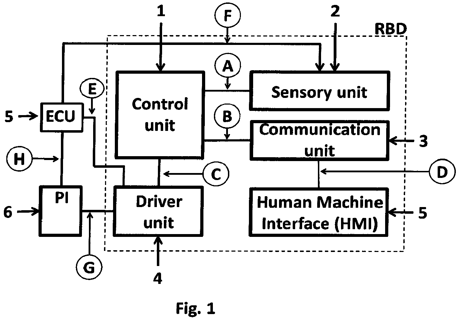

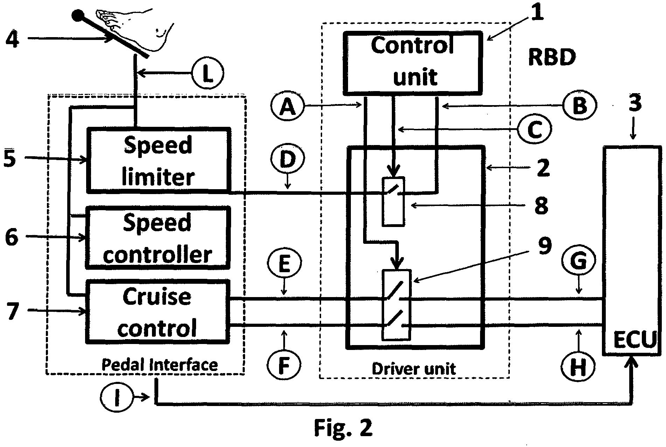

The RBD system itself comprises a control unit, a sensory unit, a communication unit, a driver unit and an Human Machine Interface (HMI) as in Fig. **1**. The system is directly connected to the vehicle's ECU and the PI including the cruise control, the speed limitation, the speed control systems, or a combination of these. The RBD system is connected and receives all the available data from the ECU, for example on the vehicle's status including the speed, the engine's rotations per minute, the hand brake and the power take-off activation, the load on the suspension system or the delivered engine torque. The outputs of the RBD are connected to the PI to determine the proper control strategy on the vehicle performance, by acting on the cruise control, the speed limitation and the speed control systems or a combination of these, as described in Fig. **2****.**

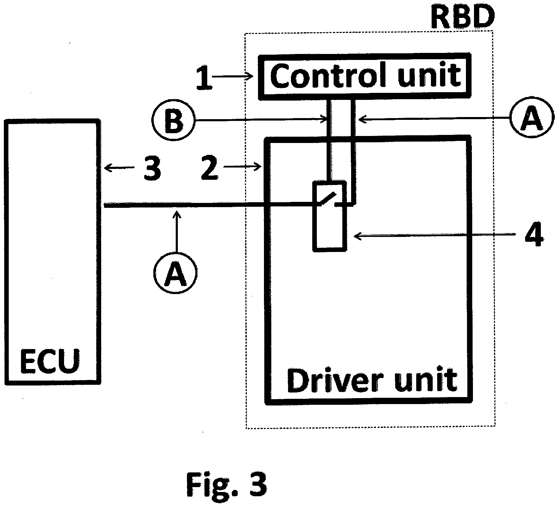

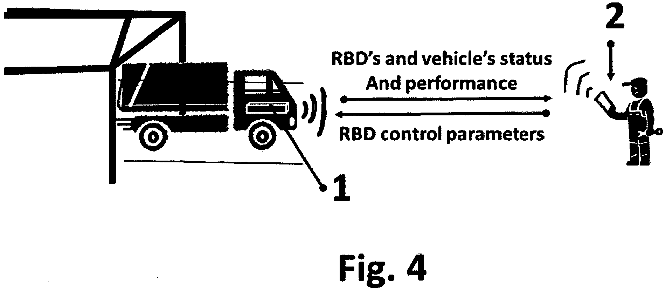

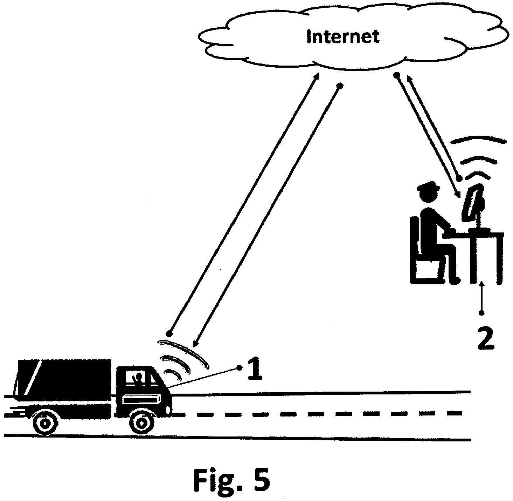

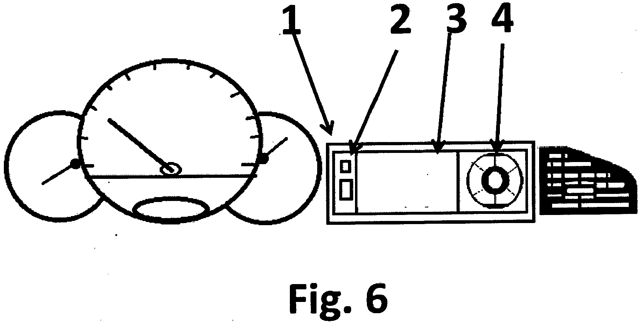

Further outputs of the driver unit can be connected to the ECU to control the engine, for example to determine the engine stop as in Fig. **3****.** The system's functional units are below described:
- The control unit consists of a computing system and the necessary electronic components to perform the computer-implemented control strategy on the vehicle. The computing system can include one or more microcontrollers and the necessary digital or analogic electronics to control actuators and relays, communicate on serial or parallel ports and manage the power supply.
- The sensory unit is instrumented with all the useful sensors for the implementation of the vehicle's computer-implemented control strategy. In particular it can include a combination of the following sensor typologies: (i) a vehicle localization system such as the Global Positioning System (GPS) or the GLObal NAvigation Satellite System (GLONASS), (ii) inclinometers for the estimation of the vehicle pose and (iii) inertial measurement units, accelerometers, gyroscopes or magnetometers for the estimation of the vehicle dynamics and pose.
- The driver unit consists of the physical electronic devices including switches and relays, connected to the PI to control the inputs and the status of the cruise control, the sped limitation or the speed control systems installed in the vehicle. The relays of the driver unit are used to connect or disconnect the inputs of the cruise control, the sped limitation or the speed control systems to the vehicle's ECU, or determine the status of these inputs, depending on the adopted control strategy. For example the RBD control unit can act on the relays to exclude the connections of the PI's inputs with the ECU signals related to the vehicle's speed or the engine rate per minute. Further outputs from the control units can be connected to the ECU and dedicated to the control of the engine status, for example to stop the engine.
- The communication unit connects the RBD system to the embedded interfaces, external devices and internet resources, or a combination of these, continuously regardless the time and the position. In particular it is intended to exchange information with the connected devices and allow the tuning of the vehicle's control strategy. The status of the vehicle and the RBD system can be monitored continuously and remotely, and the RBD control strategy can be reconfigured, activated, disabled or tuned at any time as in Fig.**4** and Fig. **5**. The communication unit can include radios for the connection of the RBD system to personal, local or wide area networks or a combination of these. The communication unit can connect the RBD system to the internet, to the mobile phone networks or directly to personal devices in the neighbourhood. The unit can embed for example a GSM, UMTS, HSPA or LTE communication system, or a combination of these, to connect the RBD to the internet even when the vehicle is moving. Further radio communication technologies can be included like Wi-Fi, NFC, RFID and Bluetooth radios to get the RBD able to connect to the internet or directly exchange data with personal devices like smartphones, tablet, diagnostic tools or PC.
- The HMI provides visual, acoustic and haptic information, or a combination of these, to the driver about the RBD state and the efficiency and the eco-sustainability of the drive. It can include a screen, a touch screen, keyboards, push buttons, switches, speakers, microphones or a combination of these (see Fig. **6**). The HMI is intended to inform the driver on the vehicle status, the driving performance, the eco-sustainability of the drive, the estimated mechanical stress level induced on the vehicle, critical warnings from on board sensors or devices on the engine and gears and the status of the RBD system. It also displays messages or useful information received by the communication unit, like messages form the vehicle's or the fleet's manager or management system. The input systems of the HMI can be used by the driver to provide inputs to the RBD system, switch it on or off, modulate, anticipate, delay or tune the control strategy.

### Brief description of the figures:

Unless otherwise stated, all the drawings are not in scale.
Fig.1 is a block diagram, representing the RBD system, that embeds the control unit (1), the sensory unit (2), the communication unit (3), the driver unit (4) and the human machine interface (5). The control unit is directly connected to the sensory, communication and driver units respectively by means of the bidirectional communication busses A, B and C. The human machine interface and the communication unit communicate through the bus D. The driver unit is directly connected to the vehicle's ECU (6) and the PI (7) through the bidirectional communication buses E and G, while the sensory unit gets data on the vehicle status using the bus F. The vehicle's ECU and PI are connected through the internal bus H.
Fig. 2 shows the connections between the RBD system, and the other vehicles electronics. The vehicle's performance is controlled by the RBD system by determining the status of the pedal interface including a speed limiter (5), a speed controller (6) and a cruise control (7) or a combination of these. The acceleration pedal control signal (I) of the vehicle determines the vehicle's speed through the ECU (3). This signal comes from the pedal interface where the speed limiter (5), the speed controller (6) or the cruise control (7) can tune the signal from the pedal bus (L) of the acceleration pedal (4). In turn, the pedal interface and its status are controlled by the driver unit (2) of the RBD system, that determines the acceleration pedal control input signals (D), the rpm control input signal (E) and the vehicle's speed input signal (F) using dedicated bus lines. In particular, RBD's control unit (1) acts on the relay (8) through the control bus (C) and the input bus (D) to set the status of the acceleration pedal control input (D). Similarly, the control bus (A) determines the status of the relay (9) to connect the engine RPM (G) and the vehicle's speed (H) signal buss from the ECU (3) respectively to the to the rpm control input signal (E) and the vehicle's speed input signal (F) of the pedal interface.
Fig. 3 shows the connection between the RBD and the ECU of the vehicle. The control unit (1) implements the vehicle's control strategy determining the engine status (on/off) through the driver unit (2) connected to the ECU (3). The control of the engine status is implemented by means of the relay (4) that sets the engine stop control signal over the communication bus. The relay input (A) and control (B) signals are determined by the control unit.
Fig.4 shows the RBD system (1) on the vehicle, that sends data about the vehicle's and the RBD's status, to the remote vehicle's or fleet's managers (2) directly to the connected personal devices or diagnostic tools. The same communication medium is used to receive information and the parameters for the tuning of the vehicle's control strategy.
Fig. 5 shows the RBD system (1) on the vehicle, that sends data about the vehicle's and the RBD's status and performance, to the remote vehicle's or fleet's managers (2) over the internet using mobile phone networks. The same communication medium is used to receive information and the parameters for the tuning of the vehicle's control strategy.
Fig. 6 The drawing shows the HMI (1) including (1) keyboards, push buttons or switches, (2) screens or touch screens, (4) speakers and microphones, or a combination of these.

## Claims

1. A computer-implemented method to autonomously and dynamically act on the functional status of the pedal interface of a vehicle including a cruise control, a speed limitation, a speed control system or a combination of these, to control the performance of a vehicle depending on the geographical location, the time, the vehicle speed, accelerations and inclination respect to the ground and therefore improve the efficiency and safety of drive, reduce the fuel consumption, the maintenance costs and the risks of faults due to premature wear of the mechanics.

2. A computer-implemented method to autonomously and dynamically assess the driver's behaviours and the mechanical stress and wear induced on the vehicle's mechanics, like gears and suspensions, or consumable parts like tires and brakes, by measuring the vehicle's speed, the accelerations, the delivered engine torque and the usage of the power take off, or a combination of these information.

3. An on-board computer system for a vehicle, comprising at least a control unit, a communication unit, a driver unit and a human machine interface, able to automatically control the vehicle performance according to claim 1.

4. The computer-implemented method according to claim 1, wherein the performance limitation on the vehicle is automatically disabled if the vehicle has the power take-off unit on, while it is not moving, or whenever the vehicle faces relevant uphill in order to avoid engine torque outages or unwanted stops.

5. The on-board vehicle computer system of claim 3, wherein the performance control strategy can be reconfigured, activated, disabled or tuned remotely, continuously and regardless the time, the position and the status of the vehicle by means of a communication unit. The control unit can connect to the internet or to personal devices like smartphones, tablet, PCs or diagnostic tools using wireless communication technologies and standards such as the GSM, UMTS, HSPA, LTE, Bluetooth, Wi-FI, NFC or RFID.

6. The on-board vehicle computer system of claim 3, wherein the on-board human machine interface comprises a screen, a touch screen, a keybord, push buttons, switches, an acoustic and an haptic interface or a combination of these.

7. The on-board computer system of claim 3 and the on-board human machine interface of claim 6 that can provide information to the driver on the status and the performance of a vehicle, the effectiveness and efficiency of the RBD system, the evaluation of the driver's behaviours and the identification of the performed activities as well as the estimation of the mechanical stress and wear induced on the vehicle's mechanics, like the gears and suspensions, or consumable parts like tires and brakes, and the relative risk of failure.

8. The on-board computer system of claim 3 that can provide the information for a continuous monitoring of the status and the performance of a vehicle, the assessment of the effectiveness and efficiency of the RBD system, the evaluation of the driver's behaviours and the identification of the performed activities as well as the estimation of the mechanical stress and wear induced on the vehicle's mechanics, like gears and suspensions, or consumable parts like tires and brakes, and the relative risk of failure, directly to fleet's managers or fleet's management systems connected to local networks or over the internet.
